# EUROPÄISCHE PATENTSCHRIFT

(11) **EP 2 147 813 B1**
(45) Veröffentlichungstag und Bekanntmachung des Hinweises auf die Patenterteilung: **25.06.2014**
(21) Anmeldenummer: 09009328.7
(22) Anmeldetag: 17.07.2009
(51) Int. Cl.: B60J 1/00

(54) **Anordnung einer feststehenden Scheibe an einem Karosserieflansch sowie Befestigungsclip zur Montage der feststehenden Scheibe**
Assembly of a fixed window to a bodywork flange and attachment clip for mounting the fixed window
Agencement d'une vitre fixe sur un flanc de carrosserie, ainsi que clip de fixation destiné au montage de la vitre fixe

(30) Priorität: 23.07.2008 DE 102008034400
(43) Veröffentlichungstag der Anmeldung: 27.01.2010
(73) Patentinhaber: Richard Fritz GmbH + Co. KG, 74354 Besigheim (DE)
(72) Erfinder: Herbst, Erich, 74354 Besigheim (DE); Knupfer, Guido, 74232 Abstatt (DE); Bissinger, Rainer, 74354 Besigheim (DE); Scheufler, Joachim, 74632 Neuenstein (DE)
(74) Vertreter: Maser, Jochen

(56) Entgegenhaltungen:
- DE-A1- 3 333 672
- DE-A1- 10 328 692
- DE-C1- 10 214 605
- JP-U- H0 325 323
- JP-U- H0 416 016
- US-A1- 2002 064 435

## Beschreibung

Die Erfindung betrifft eine Anordnung einer feststehenden Scheibe an einem Karosserieflansch sowie einen Befestigungsclip zur Montage einer feststehenden Scheibe an einem Karosserieflansch.

Aus der DE 33 33 672 A1 geht eine Anordnung für eine feststehende Scheibe an einem Karosserieflansch eines Kraftfahrzeuges hervor, bei der die Scheibe an einem Scheibenrand eine Umspritzung aufweist. An einer Innenseite der Scheibe ist ein Befestigungsclip an der Umspritzung vorgesehen, welcher durch eine Ultraschallverschweißung stoffschlüssig mit der Umspritzung verbunden ist. Dieser Befestigungsclip ist in einer Durchstecköffnung im Karosserieflansch anordenbar. Zur Fixierung des Befestigungsclips an dem Karosserieflansch, der als Spreizclip ausgebildet ist, wird von der Karosserieinnenseite ein Spreizstift eingesteckt; um den als Spreizclip ausgebildeten Befestigungsclip unverlierbar zur Durchstecköffnung zu fixieren. Anschließend kann erst eine Fahrzeuginnenverkleidung aufgebracht werden, die die Befestigungsanordnung abdeckt.

Diese Anordnung weist den Nachteil auf, dass mehrere Handhabungsbeziehungsweise Arbeitsschritte erforderlich sind, um eine feststehende Scheibe an einem Karosserieflansch zu montieren. Darüber hinaus ist eine zwangsweise Montagereihenfolge für den Fahrzeuginnenraum bei der Herstellung eines Fahrzeuges gegeben.

Der für diese Anordnung verwendete Befestigungsclip weist den Nachteil auf, dass zum einen eine spezifische Ausgestaltung eines Fußteils zur Bildung einer Ultraschallschweißverbindung mit der Umspritzung erforderlich und eine solche formschlüssige Verbindung in der Herstellung kostenintensiv ist. Darüber hinaus bedarf es einen zusätzlichen Spreizstift, um den Befestigungsclip in der Durchstecköffnung des Karosserieflansches in einer Halteposition zu fixieren.

Aus der JP 03-25323 U ist eine Anordnung einer feststehenden Scheibe an einem Karosserieflansch bekannt, bei der die Scheibe eine Umspritzung am Scheibenrand aufweist. An einem Haltepunkt der Umspritzung ist über eine separate Schraube ein Befestigungsclip fixiert. Nach dem Fixieren des Befestigungsclips wird die Scheibe zur Karosserie nach dem Einbringen des Befestigungsclips in eine Durchstecköffnung eines Karosserieflansches befestigt.

Aus der JP 04-16016 U ist eine Anordnung einer feststehenden Scheibe an einem Karosserieflansch bekannt, bei der an einer Umspritzung der Scheibe ein Vorsprung vorgesehen ist. Zur Fixierung der Scheibe an einem Karosserieflansch wird ein Befestigungselement in einem Profil eines Karosserieflansches zur Durchstecköffnung des Karosserieflansches vorpositioniert, so dass im Anschluss daran nach dem Einsetzen des Vorsprungs durch die Durchstecköffnung in die Karosserie der Vorsprung in eine Aufnahmeöffnung des Befestigungsclips eingreift. Anschließend wird über eine Verschiebebewegung des Befestigungsclipses dieser mit dem Vorsprung verriegelt und die Positionierung gesichert.

Diese beiden zuletzt genannten Anordnungen weisen den Nachteil auf, dass diese in der Handhabung aufwändig sind und bei einer nicht sachgemäßen Handhabung zu einer fehlerhaften Montage führen können.

Der Erfindung liegt deshalb die Aufgabe zugrunde, eine Anordnung einer feststehenden Scheibe an einem Karosserieflansch sowie einen Befestigungsclip für die Montage einer feststehenden Scheibe an einem Karosserieflansch vorzuschlagen, welche eine geringe Anzahl an Bauteilen umfasst sowie nur ein Einsetzen der feststehenden Scheibe von außen auf den Karosserieflansch ermöglicht, ohne weitere Handhabungsschritte an einer Innenseite des Karosserieflansches durchzuführen.

Diese Aufgabe wird erfindungsgemäß durch eine Anordnung gemäß den Merkmalen des Anspruchs 1 gelöst. Weitere vorteilhafte Ausgestaltungen und Weiterbildungen sind in den jeweiligen abhängigen Ansprüchen angegeben.

Durch die erfindungsgemäße Anordnung einer feststehenden Scheibe an einem Karosserieflansch mit einem Befestigungsclip, der vor der Montage an der Scheibe an dem Karosserieflansch auf einem Halteelement anordenbar ist, welches an einer Umspritzung der zu montierenden Scheibe vorgesehen ist, wird ermöglicht, dass nach einer Positionierung der einzusetzenden Scheibe zu einer Karosserieöffnung beziehungsweise zu dem die Karosserieöffnung umgebenden Karosserieflansch lediglich eine einfache Aufsetzbewegung erforderlich ist, um die Befestigungsclips in die jeweilige Durchstecköffnung des Karosserieflansches zu fixieren. Der Befestigungsclip nimmt nach dem Einstecken in die Durchstecköffnung des Karosserieflansches eine selbständig verrastende Position ein, wodurch die Scheibe ohne zusätzliche weitere Maßnahmen an dem Karosserieflansch fixiert ist. Dadurch ist die Montage der feststehenden Scheibe zum Karosserieflansch nicht nur einfach, sondern auch unabhängig von einzelnen Arbeitsschritten im Fahrzeuginneren.

Dabei ist ein Befestigungsclip zur Montage einer feststehenden Scheibe an einem Karosserieflansch vorgesehen, der einen hülsenförmigen Grundkörper aufweist, welcher ein radial nach außen gerichtetes Fußteil und mit Abstand zum Fußteil zumindest ein radial gegenüber dem Grundkörper nach außen weisendes und in radialer Richtung nachgiebiges Ärmchen aufweist, die eine erste Befestigungseinrichtung bilden und mit zumindest einem am Innenumfang des hülsenförmigen Grundkörpers radial nach innen weisendes Fixierelement, das eine zweite Befestigungseinrichtung bildet. Dadurch wird ermöglicht, dass der Befestigungsclip als Verbindungs- oder Koppelelement zwischen einer Umspritzung und einem Karosserieflansch einsetzbar ist und beide Teile in einer zueinander fest fixierten Position aufnimmt. Die erste und zweite Befestigungseinrichtung sind derart aufeinander abgestimmt, dass bevorzugt durch jeweils eine Aufsteckbewegung eine Befestigung erzielt werden kann. Die erste Befestigungseinrichtung ermöglicht eine Positionierung der Scheibe zum Karosserieflansch, nachdem das Befestigungselement in einer Durchstecköffnung des Karosserieflansches eingesetzt wurde. Die zweite Befestigungseinrichtung ermöglicht zumindest ein einfaches Vorfixieren des Befestigungsclips auf dem Halteelement der Umspritzung vor dem Befestigen der Scheibe am Karosserieflansch, so dass der Befestigungsclip unmittelbar nach Herstellung der Umspritzung im Randbereich der Scheibe aufgebracht und selbsthaltend angeordnet werden kann, so dass eine fertig montierbare Scheibe zur Auslieferung und Montage an einem Karosserieflansch bereitgestellt werden kann.

Bevorzugt ist vorgesehen, dass nach dem Positionieren des Befestigungsclips in der Durchstecköffnung des Karosserieflansches das zumindest eine Fixierelement des Halteelementes in eine Eingriffsposition überführbar und ein selbständiges Lösen des Befestigungsclips von dem Halteelement verhindert ist. Durch die Ausgestaltung des Halteelementes einerseits und des Befestigungsclips andererseits wird nach der Montage der Scheibe am Karosserieflansch eine zwangsweise Lagefixierung des Befestigungselementes zum Halteelement bewirkt, wodurch ein Eingriff des zumindest einen Fixierelementes des Befestigungsclips am Halteelement sichergestellt ist. Dadurch ist ein selbständiges Lösen der Scheibe verhindert. Gleichzeitig greift der Befestigungsclip selbständig verrastend an dem Karosserieflansch an. Somit weist der Befestigungsclip eine doppelte Haltefunktion auf, durch welche zum einen eine einfache Montage der Scheibe zum Karosserieflansch und zum anderen eine einfache Befestigung des Clips an der Umspritzung der Scheibe ermöglicht ist.

Bevorzugt ist eine zum Karosserieflansch weisende Befestigungsfläche am Fußteil bündig oder vertieft zu einer an dem Aufnahmebereich angrenzenden Umfangsfläche vorgesehen. Dadurch kann ein Aufbau für eine Befestigungsanordnung mit einer geringen Aufbauhöhe erzielt werden. Darüber hinaus kann eine weitere Lagefixierung des Befestigungsclips zur Umspritzung ermöglicht sein. Des Weiteren ist bei der bündigen Anordnung der Befestigungsfläche am Fußteil zur Umfangsfläche des Aufnahmebereiches oder einer vertieften Anordnung der Befestigungsfläche am Fußteil zur Umfangsfläche des Aufnahmebereiches vorgesehen, dass die Umspritzung an einem zur Durchstecköffnung benachbarten Bereich des Karosserieflansches anliegt. Dadurch kann eine zusätzliche Dichtungswirkung und/oder eine vibrationsdämpfende Anordnung beziehungsweise schwingungsabsorbierende Lagerung der Scheibe zum Karosserieflansch ermöglicht werden.

Nach einer weiteren bevorzugten Ausgestaltung der Anordnung ist vorgesehen, dass der Befestigungsclip einen hülsenförmigen Grundkörper aufweist, an dem zumindest ein gegenüber einem Halteabschnitt nach außen gerichtetes und nachgiebiges Ärmchen vorgesehen ist. Bei einer ersten Ausführungsform ist ein runder hülsenförmiger Grundkörper vorgesehen, bei dem die Ärmchen radial nach außen gerichtet und in radialer Richtung nachgiebig sind. Durch diese Ausgestaltung des zumindest einen radial nach außen gerichteten Ärmchens wird die selbstverrastende Anordnung des Befestigungsclips am Karosserieflansch ermöglicht. Während einer Montage kann das nachgiebige Ärmchen, welches federelastisch ausgebildet sein kann, auf den Grundkörper zubewegt werden, so dass ein einfaches Einsetzen des Befestigungsclips ermöglicht ist. Anschließend kehren die nachgiebigen Ärmchen wieder in ihre Ausgangsposition zurück und hintergreifen die Durchstecköffnung, so dass die Ärmchen an einer Innenseite des Karosserieflansches angreifen. Analoges gilt für eine weitere Ausführungsform, bei der ein quadratischer oder rechteckiger hülsenförmiger Grundkörper vorgesehen ist. Die Ärmchen sind ebenfalls zur Seitenfläche nachgiebig ausgebildet.

Des Weiteren ist bevorzugt vorgesehen, dass das freie Ende des Ärmchens in einem Abstand zum Fußteil vorgesehen ist, welcher zumindest der Dicke des die Durchstecköffnung umgebenden Karosserieflansches entspricht. Dadurch wird nach dem Einführen des Befestigungsclips in die Durchstecköffnung ein selbständiges Zurückkehren der Ärmchen in eine verrastende Position ermöglicht.

Des Weiteren ist bevorzugt vorgesehen, dass die Umfangsfläche des Aufnahmebereiches für den Befestigungsclip an der Umspritzung im montierten Zustand der Scheibe zumindest abschnittsweise an einer Außenseite des Karosserieflansches anliegt und das zumindest eine Ärmchen des Befestigungsclips an einer Innenseite des Karosserieflansches sich unter zumindest geringer Vorspannung abstützt. Dadurch kann eine gesicherte Anordnung der feststehenden Scheiben zum Karosserieflansch gegeben sein. Die Befestigungsfläche des Fußteils vom Befestigungsclip ist hierfür bevorzugt gegenüber der Umfangsfläche zurückversetzt angeordnet. Während der Montage der feststehenden Scheibe wird nach dem Einführen des Befestigungsclips eine kurze Druckerhöhung bewirkt, um die an der Außenseite des Karosserieflansches anliegende Umspritzung im elastischen Bereich zu komprimieren, damit die Ärmchen des Befestigungsclips in eine Ausgangslage zurückkehren können, um an der Innenseite des Karosserieflansches verrastend anzugreifen.

Des Weiteren ist bevorzugt vorgesehen, dass das Halteelement einteilig an der Umspritzung angeformt ist. Dadurch wird eine einfache Herstellung ermöglicht, da das Halteelement gleichzeitig mit der Herstellung der Umspritzung im Randbereich der Scheibe vorgenommen werden kann.

Nach einer bevorzugten Ausgestaltung des Befestigungsclips sind an dem zumindest einen Ärmchen und zumindest einen Fixierelement Einführschrägen vorgesehen, die jeweils eine entgegengesetzte Wirkrichtung aufweisen beziehungsweise in entgegengesetzter Richtung geneigt sind. Dies ermöglicht zunächst ein einfaches Aufstecken des Befestigungsclips auf dem Halteelement der Umspritzung sowie die anschließende Durchführung einer einfachen Einsteckbewegung des Befestigungsclips am Karosserieflansch.

Nach einer weiteren bevorzugten Ausgestaltung der Erfindung ist vorgesehen, dass der hülsenförmige Grundkörper zumindest zwei, vorzugsweise spiegelbildlich zueinander ausgebildete, Hälften aufweist, die durch eine vorzugsweise stegförmige Gelenkverbindung am Kopfteil verbunden sind. Diese Ausgestaltung ermöglicht, dass die zwei Hälften um die Gelenkverbindung aufweitbar sind, so dass während der Aufsteckbewegung des Befestigungsclips auf das Halteelement zunächst eine geringfügige Aufweitung der Hälften durch die radial nach innen weisenden Fixierelemente gegeben ist. Dies erleichtert die Aufsteck- oder Aufsetzbewegung des Befestigungsclips. Zusätzlich wird eine Außenumfangsfläche des Halteelementes nicht beschädigt. Alternativ können auch beispielsweise vier gleiche Gehäuseabschnitte vorgesehen sein, so dass jeweils zwei einander gegenüberliegende Gelenkabschnitte eine gemeinsame Schwenkachse bilden, entlang der die Hälften beziehungsweise die Viertel öffenbar sind.

Nach einer weiteren bevorzugten Ausgestaltung des Befestigungsclips ist vorgesehen, dass die Fixierelemente einen wulstförmigen oder widerhakenförmigen Querschnitt aufweisen. Bei der wulstförmigen Ausgestaltung der Fixierelemente wird eine Querschnittsverengung einer Umfangsfläche des Halteelementes erreicht, sobald der Befestigungsclip in der Durchstecköffnung angeordnet ist. Dadurch wird eine form- und kraftschlüssige Verbindung des Befestigungsclips zum Halteelement erzielt. Bei der alternativen Ausführungsform ist vorgesehen, dass die widerhakenförmigen Fixierelemente in das Halteelement eingreifen und sich in einem äußeren Randbereich des Halteelementes verkrallen. Dadurch kann eine erhöhte Zugskraft zwischen dem Befestigungsclip und dem Halteelement erzielt werden.

Eine weitere vorteilhafte Ausgestaltung des Befestigungsclips sieht vor, dass vorzugsweise zwischen zwei mit radialem Abstand am hülsenförmigen Grundkörper angeordneten Ärmchen ein an das Fußteil angrenzendes Zentrierelement vorgesehen ist, welches vorzugsweise zum Kopfteil des Grundkörpers weisend eine Einführschräge aufweist. Das Zentrierelement ermöglicht eine Ausrichtung des Befestigungsclips beziehungsweise des Haltepunktes der Umspritzung, um eine sichere Abdichtung zwischen der Scheibe und der Karosserieöffnung zu erzielen. Darüber hinaus kann dadurch auch eine gleichmäßige Ausrichtung der Scheibe zur Karosserieöffnung gegeben sein. Bevorzugt ist an jeder Hälfte des Grundkörpers ein Zentrierelement vorgesehen. Durch die zwischen den beiden Hälften des Grundkörpers vorgesehene Aussparung mit Ausnahme des stegförmigen Gelenkabschnittes und dem zumindest geringfügig nachgiebigen Material des Halteelementes ist eine zumindest geringfügig elastisch nachgiebige Anordnung geschaffen, so dass durch die Zentrierelemente eine gesicherte und lagerichtige Anordnung ermöglicht wird.

Das Fußteil des Befestigungsclips ist bevorzugt beim runden hülsenförmigen Grundkörper als radial zumindest abschnittsweise umlaufender Ringbund ausgebildet, der an seiner Außenseite eine Anlagefläche zur Positionierung an der Umspritzung und gegenüberliegend eine Befestigungsfläche aufweist, die zu dem freien Ende des Ärmchens weist, wobei der Abstand zwischen der Befestigungsfläche und dem freien Ende des Ärmchens zumindest der Dicke des die Durchstecköffnung umgebenden Karosserieflansches entspricht. Dadurch können eine sichere Positionierung des Befestigungsclips am Karosserieflansch und ein einfacher Aufbau des Befestigungsclips gegeben sein. Beim quadratischen oder rechteckigen Grundkörper gilt Analoges, wobei anstelle eines Ringbundes nach außen gerichtete Stegabschnitte vorgesehen sind.

Der Befestigungsclip ist bevorzugt als Kunststoffspritzgussteil ausgebildet. Dadurch kann eine kostengünstige Herstellung gegeben sein, wobei die Ausgestaltung des Befestigungsclips ermöglicht, dass ein zweiteiliges Spritzgusswerkzeug einsetzbar ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittdarstellung der erfindungsgemäßen Anordnung einer feststehenden Scheibe an einem Karosserieflansch,
- Figur 2: eine perspektivische Darstellung des Befestigungsclips für die Anordnung gemäß Figur 1,
- Figur 3: eine schematische Seitenansicht des Befestigungsclips gemäß Figur 2,
- Figur 4: eine schematische Ansicht von oben auf den Befestigungsclip gemäß Figur 3,
- Figur 5: eine schematische Schnittdarstellung einer alternativen erfindungsgemäßen Anordnung einer feststehenden Scheibe an einem Karosserieflansch und
- Figur 6: eine perspektivische Darstellung eines alternativen Befestigungsclips.

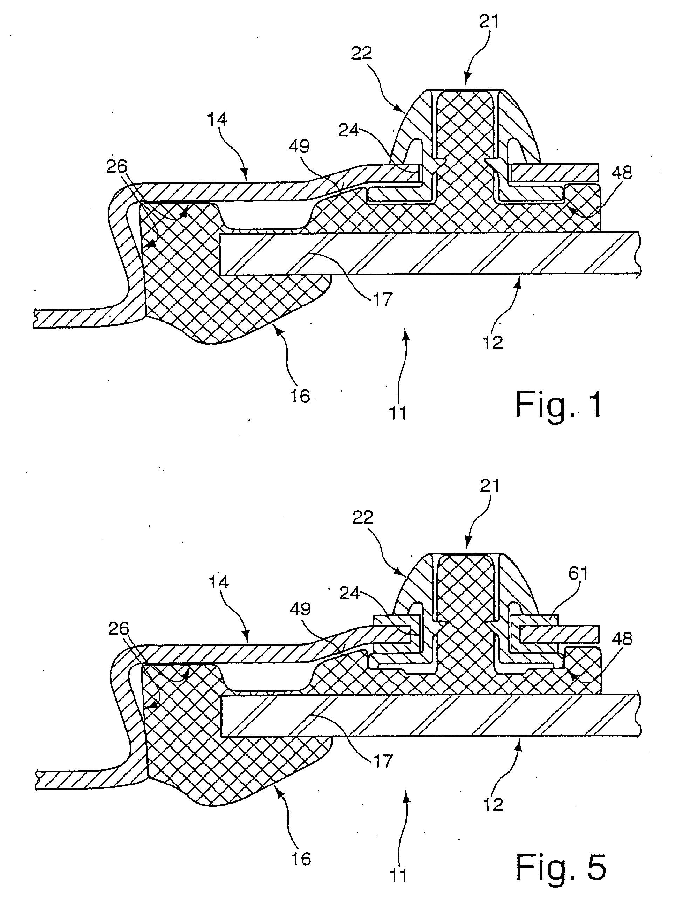

In Figur 1 ist eine schematische Schnittdarstellung der erfindungsgemäßen Anordnung 11 einer feststehenden Scheibe 12 an einem Karosserieflansch 14 eines nicht näher dargestellten Kraftfahrzeugs dargestellt, der eine Karosserieöffnung umgibt. Die Scheibe 12 wird durch eine Umspritzung 16, welche einen Scheibenrand 17 umgibt, dicht und fest an dem Karosserieflansch 14 angeordnet. Die Scheibe 12 ist bevorzugt als Glasscheibe ausgebildet und kann als Seitenscheibe, Heckscheibe und/oder Windschutzscheibe eingesetzt werden.

Die zumindest an einer Innenseite des Scheibenrandes 17 der Scheibe 12 sich erstreckende Umspritzung 16 weist ein Halteelement 21 auf. Das Halteelement 21 ist bevorzugt einteilig mit der Umspritzung 16 ausgebildet. Alternativ kann dieses Halteelement 21 auch separat ausgebildet und durch eine Rast- oder Klemmverbindung als auch durch eine stoffschlüssige Verbindung, wie Kleben oder Schweißen, miteinander verbunden sein. An dem Halteelement 21 ist ein Befestigungsclip 22 aufge- steckt. Dieser Befestigungsclip 22 greift in eine Durchstecköffnung 24 des Karosserieflansches 14 ein, wodurch die Scheibe 12 feststehend am Karosserieflansch 14 positioniert ist und einzelne Dichtungsabschnitte 26 der Umspritzung 16 an einer Außenseite des Karosserieflansches 14 anliegen. Das Halteelement 21 erstreckt sich bevorzugt über die gesamte Höhe des Befestigungsclips 22.

Für die Montage der Scheibe 12 an dem Karosserieflansch 14 ist vorgesehen, dass zunächst der Befestigungsclip 22 auf das Halteelement 21 aufgesteckt und anschließend diese vormontierte Baugruppe einheitlich zum Karosserieflansch 14 positioniert wird, bevor durch einen weiteren Montageschritt alle an einer Umspritzung 16 vorgesehenen Befestigungsclips 22 jeweils in eine Durchstecköffnung 24 von außen nach innen eingesetzt werden. Nach dem Einsetzen und Positionieren der Befestigungsclips 22 in die Durchstecköffnungen 24 des Karosserieflansches 14 erfolgt eine selbständig verrastende Fixierung des Befestigungsclips 22 und somit der Scheibe 12 am Karosserieflansch 14, ohne dass weitere Maßnahmen erforderlich sind.

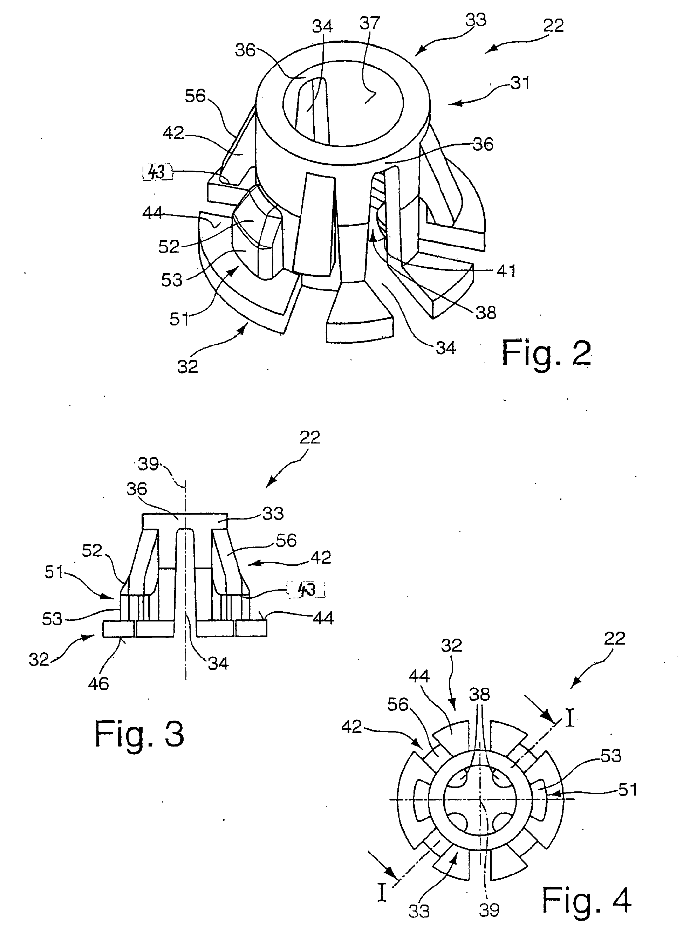

Der in der Schnittdarstellung in Figur 1 gezeigte Befestigungsclip 22 ist perspektivisch in Figur 2, in einer Seitenansicht in Figur 3 und in einer Draufsicht in Figur 4 dargestellt und wird nachfolgend näher beschrieben. Die Schnittdarstellung in Figur 1 entspricht einem Schnitt entlang der Linie I-I in Figur 4.

Der Befestigungsclip 22 weist einen hülsenförmigen Grundkörper 31 auf, welcher ein Fußteil 32 und ein Kopfteil 33 umfasst. Der hülsenförmige Grundkörper 31 ist durch zwei einander gegenüberliegende Aussparungen 34 in zwei Hälften aufgeteilt, wobei die beiden Hälften im Bereich des Kopfteils 33 durch eine stegförmige Gelenkverbindung 36 miteinander verbunden sind. Bevorzugt sind die beiden Hälften spiegelbildlich zueinander angeordnet, wobei die Spiegelebene sich entlang der beiden einander gegenüberliegenden Aussparungen 34 erstreckt. Der hülsenförmige Grundkörper 31 ist beispielhaft mit einer runden Hülse ausgebildet. Alternativ können auch weitere Geometrien, wie quadratisch, rechteckig, mehreckig als auch oval oder dergleichen, vorgesehen sein. An einem Innenumfang 37 des hülsenförmigen Grundkörpers 31 sind Fixierelemente 38 vorgesehen, die radial nach innen zur Längsmittelachse 39 des Befestigungsclips 22 weisen. Bei der in den Figuren 1 bis 4 dargestellten Ausführungsform der Fixierelemente 38 umfassen diese eine Einführschräge 41, die sich vorzugsweise bis zum widerhakenförmig ausgebildeten Fixierelement 38 erstreckt und eine einfache Aufsetzbewegung des Befestigungsclips 22 auf dem bevorzugt dorn- oder stiftförmig ausgebildeten Halteelement 21 ermöglicht. Dies geht beispielsweise aus Figur 1 hervor. Während einer Aufsetzbewegung des Befestigungsclips 22 auf das Halteelement 21 kann aufgrund der Gelenkverbindung 36 das Fußteil 32 sich zumindest geringfügig aufweiten, so dass ein einfaches Aufsetzen und Aufstecken ermöglicht ist. Sobald die beiden Hälften der beiden Fußteile 32 auf das Halteelement 21 zubewegt werden, greift das zumindest eine Fixierelement 38 in das Halteelement 21 ein und legt die Position des Befestigungsclips 22 zum Halteelement 21 fest.

Am Außenumfang des hülsenförmigen Grundkörpers 31 sind radial nach außen weisende und in radialer Richtung nachgiebige Ärmchen 42 vorgesehen, deren freien Enden 43 auf eine Befestigungsfläche 44 am Fußteil 32 weisen. Das Fußteil 32 ist als Ringbund abschnittsweise ausgebildet. Diese abschnittsweise Ausgestaltung weist den Vorteil auf, dass dadurch eine einfache Herstellung des Befestigungsclips 22 als Spritzgussteil ausgebildet ist. Das Fußteil 32 weist an einer der Befestigungsfläche 44 gegenüberliegenden Seite eine Anlagefläche 46 auf, welche nach dem Positionieren des Befestigungsclips 22 in einen Aufnahmebereich 48 der Umspritzung 16 (Figur 1) anliegt. Der Aufnahmebereich 48 der Umspritzung 16 ist dabei derart ausgebildet, dass eine Befestigungsfläche 44 bündig oder unterhalb einer an den Aufnahmebereich 48 angrenzenden Umfangsfläche 49 liegt.

An den hülsenförmigen Grundkörper 31 des Befestigungsclips 22 ist des Weiteren zumindest ein Zentrierelement 51 vorgesehen, welches eine Einführschräge 52 aufweist. Diese Einführschräge 52 geht in eine Zentrierfläche 53 über, welche an die Befestigungsfläche 44 angrenzt. Bevorzugt sind zwei einander gegenüberliegende Zentrierelemente 51 zur Ausrichtung und Positionierung der Scheibe 12 zum Karosserieflansch 14 vorgesehen.

Zum Einführen des Befestigungsclips 22 in die Durchstecköffnung 24 weisen die Ärmchen 42 Einführschrägen 56 auf, die dieselbe Wirkrichtung wie die Einführschräge 52 des Zentrierelementes 51 haben. Beim Einführen des Befestigungsclips 22 in die Durchstecköffnung 24 werden die Ärmchen 42 auf den hülsenförmigen Grundkörper 31 zubewegt. Nach dem vollständigen Durchstecken kehren die Ärmchen 42 in ihre Ausgangslage zurück und greifen an einer Innenseite des Karosserieflansches 14 an beziehungsweise hintergreifen die Durchstecköffnung 24.

Aus Figur 4 ist beispielsweise eine bevorzugte Anordnung der Fixierelemente 38 und des Zentrierelementes 51 an der jeweiligen Hälfte des hülsenförmigen Grundkörpers 31 dargestellt. Die Zentrierelemente 51 liegen bevorzugt auf einer Achse mittig zur jeweiligen Hälfte des jeweiligen hülsenförmigen Grundkörpers 31. Dadurch erfolgt nach dem Einsetzen des Befestigungsclips 22 in die Durchstecköffnung 24 von beiden Seiten eine nahezu gleichzeitige Bewegung auf die Längsmittelachse 39, wodurch die Fixierelemente 38, von denen vorzugsweise vier gleichmäßig über den Umfang verteilt vorgesehen sind, an dem Halteelement 21 angreifen beziehungsweise eingreifen. Dadurch kann der Befestigungsclip 22 mit einer hohen Haltekraft an dem Haltelement 21 befestigt werden. Darüber hinaus wird durch die dem Fixierelement 38 an der Außenseite gegenüberliegenden Ärmchen 42 erzielt, dass bei der Krafteinwirkung auf das Ärmchen 42 während dem Einführen in die Durchstecköffnung 24 die Fixierelemente 38 auf das Halteelement 21 zubewegt werden, wodurch die Haltekraft am Halteelement 21 zumindest aufrechterhalten bleibt.

Die erfindungsgemäße Anordnung der feststehenden Scheibe 12 an einem Karosserieflansch 14 ermöglicht somit, dass zunächst der Befestigungsclip 12 auf das bevorzugt einteilig an der Umspritzung 16 angeordnete Halteelement 21 aufgesetzt wird, um anschließend den Befestigungsclip 22 in die Durchstecköffnung 24 einzubringen. Sofern vor dem Einsetzen des Befestigungsclips 21 in die Durchstecköffnung 26 die Fixierelemente 38 noch nicht vollständig an dem Halteelement 21 angreifen oder eingreifen, wird dies zum Zeitpunkt des Einsetzens des Befestigungsclips 22 in die Durchstecköffnung 24 bewirkt, da die Ärmchen 42 als auch die Zentrierflächen 53 der Zentrierelemente 51 am Öffnungsrand der Durchstecköffnung 24 angreifen und somit die Fixierelemente 38 zwangsweise in die Befestigungsposition übergeführt werden. Nach dem Einsetzen des Befestigungsclips 12 in die Durchstecköffnung 24 bleibt auch die Fixierung des Befestigungsclips 22 am Halteelement 21 zwangsweise aufrechterhalten. Durch diese Anordnung wird eine einfache und schnelle Montage einer feststehenden Scheibe 12 an einem Karosserieflansch 14 ermöglicht.

In Figur 5 ist eine schematische Schnittdarstellung einer alternativen Ausführungsform der erfindungsgemäßen Anordnung 11 zu Figur 1 dargestellt. Die vorbeschriebenen Ausführungsformen und Ausgestaltungen gelten auch für diese alternative Ausführungsform, wobei nachfolgend nur auf die Änderungen als Alternativen eingegangen wird.

In der Durchstecköffnung 24 ist bevorzugt ein Dichtungselement 61 eingesetzt, welches zumindest den radialen Rand der Durchstecköffnung umgibt. Bevorzugt weist das Dichtungselement 61 eine nach außen offene umlaufende Nut auf, so dass das Dichtungselement 61 eine Ober- und Unterseite des Karosserieflansches 14 im Randbereich der Durchstecköffnung 24 umgibt. Dadurch kann zusätzlich eine Abdichtungswirkung erzielt werden. Des Weiteren kann eine Schwingungsentkopplung zwischen dem Karosserieflansch 14 und den Ärmchen 42 des Befestigungsclips 22 erzielt werden.

Der in Figur 5 dargestellte Befestigungsclip 22 weist beispielhaft eine alternative Ausgestaltung des Fußteils 32 auf. Die Anlagefläche 46 ist nur als umlaufende Stegfläche oder schmale Ringfläche ausgebildet. Diese Anordnung weist den Vorteil auf, dass während der Aufsteckbewegung des Befestigungsclips 22 der hülsenförmige Grundkörper 31 nach der Anlage der Anlagefläche 46 im Aufnahmebereich 48 der Umspritzung 16 noch geringfügig weiter nach unten in Aufsteckrichtung gedrückt werden kann, bevor die Fixierelemente 38 bei einer Art Rückfederbewegung vollständig in das Haltelement 31 eingreifen. Dadurch wird aufgrund eines durch die konstruktive Ausgestaltung des Fußteils 32 ausgebildeten Hebelarmes eine Rückstellbewegung erzielt, wodurch die Fixierelemente 31 mit einer erhöhten Kraft in das Halteelement 21 eingreifen. Dadurch kann die Eingreifkraft der Fixierelemente 38 und somit die Haltekraft erhöht werden. Nur beispielsweise kann vorgesehen sein, dass in einem an das Halteelement 21 angrenzenden Bereich im Aufnahmebereich 48 eine geringfügige Vertiefung gegenüber dem Randbereich vorgesehen ist, so dass die Aufbringung der Vorspannung im Fußteil 32 erleichtert ist.

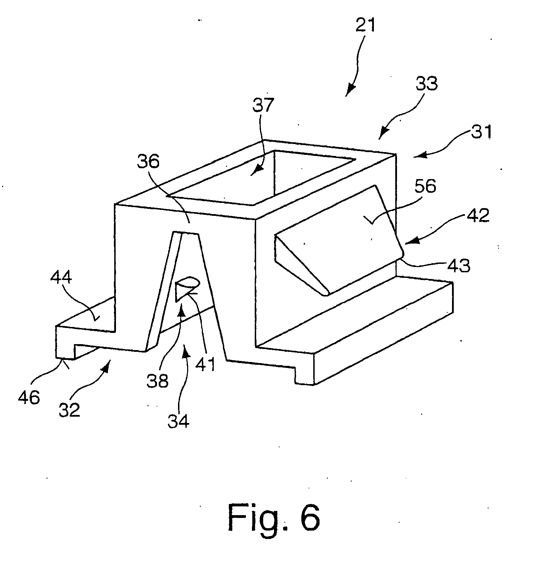

In Figur 6 ist eine alternative Ausführungsform eines Befestigungsclips 22 zu den Figuren 2 bis 4 dargestellt. Die vorbeschriebenen vorteilhaften Ausführungsformen und Alternativen gelten analog für den in Figur 6 dargestellten Befestigungsclip 22. Dieser weicht in der Geometrie des hülsenförmigen Grundkörpers 31 ab. Beispielsweise ist ein rechteckiger hülsenförmiger Grundkörper 31 vorgesehen. Alternativ kann auch ein quadratischer Grundkörper vorgesehen sein. Ebenso können mehreckige, wie beispielsweise sechs- oder achteckige, Grundkörper entsprechend ausgebildet sein. Die Halteelemente 21 sind bevorzugt in der Geometrie an den Innenumfang des hülsenförmigen Grundkörper 31 angepasst.

Bei der rechteckigen Ausgestaltung des hülsenförmigen Grundkörpers 31 genügen beispielsweise zwei Ärmchen, die sich bevorzugt in der Breite über einen großen Bereich der Seitenfläche erstrecken. Alternativ zu einem sehr breiten Ärmchen 42 können auch zwei oder mehrere Ärmchen nebeneinander an einer Seitenwand vorgesehen sein. Auch kann die Anzahl der Ärmchen auf jeder Seitenwand unterschiedlich sein. So können beispielsweise an einer Seitenwand zwei Ärmchen im Abstand zueinander und auf der gegenüberliegenden Seitenwand ein Ärmchen vorgesehen sein, das in der Lücke der beiden gegenüberliegenden Ärmchen positioniert ist.

Das Fußteil 32 des Befestigungsclips 22 gemäß Figur 6 ist als nach außen gerichteter Stegabschnitt ausgebildet, der beispielsweise eine schmale streifen- oder rippenförmig ausgebildete Anlagefläche 46 aufweist. Durch diese rippen- oder streifenförmige Anlagefläche 46 wird derselbe Effekt während dem Aufsetzen oder Aufstecken des Befestigungsclips 22 auf dem Halteelement 21 erzielt, wie für den Befestigungsclip 22 in Figur 5 beschrieben ist. Aufgrund der rechtwinkligen oder quadratischen Geometrie des hülsenförmigen Grundkörpers 31 können zusätzliche Zentrierelemente entfallen, da eine Zentrierung oder Ausrichtung durch die Grundkörpergeometrie des Befestigungsclips 22 erfolgen kann.

## Patentansprüche

1. Anordnung einer feststehenden Scheibe (12) an einem Karosserieflansch (14), bei der die Scheibe (12) eine am Scheibenrand (17) angeordnete Umspritzung (16) aufweist und mit einem Befestigungsclip (22), der die Umspritzung (16) mit dem Karosserieflansch (14) verbindet, **dadurch gekennzeichnet,**
- **dass** der Befestigungsclip einen hülsenförmiger Grundkörper (31) aufweist, der ein radial nach außen gerichtetes Fußteil (32) und mit Abstand zum Fußteil (32) zumindest ein radial gegenüber dem Grundkörper (31) nach außen weisendes und radial nachgiebiges Ärmchen (42) aufweist, die eine erste Befestigungseinrichtung bilden, und dass an einem Innenumfang des hülsenförmigen Grundkörpers (31) zumindest ein radial nach innen weisendes Fixierelement (38) vorgesehen ist, das eine zweite Befestigungseinrichtung bildet,
- **dass** an der Umspritzung (16) zumindest ein zum Karosserieflansch (14) weisendes Halteelement (21) vorgesehen ist, das als Dorn oder Stift ausgebildet ist, an welchem der Befestigungsclip (22) anordenbar ist, bevor der Befestigungsclip (22) zur Montage der Scheibe am Karosserieflansch (14) in einer Durchstecköffnung (24) des Karosserieflansches (14) selbständig verrastend fixiert ist,
- **dass** das zumindest eine Fixierelement (38) nach dem Aufsetzen oder Aufstecken des Befestigungsclips (22) an dem Halteelement (21) der Umspritzung (16) zumindest teilweise an dem Halteelement (21) angreift, und
- **dass** das Fußteil (32) des Befestigungsclips (22) in einem das Halteelement (21) umgebenden Aufnahmebereich (48) anordenbar ist.

2. Anordnung nach Anspruch 1, **dadurch gekennzeichnet, dass** nach dem Positionieren des Befestigungsclips (22) in der Durchstecköffnung (24) des Karosserieflansches (14) das zumindest eine Fixierelement (38) in eine Eingriffsposition zum Halteelement (21) überführbar und vorzugsweise ein selbständiges Lösen des Befestigungsclips (22) vom Halteelement (21) verhindert ist.

3. Anordnung nach Anspruch 1, **dadurch gekennzeichnet, dass** eine zum Karosserieflansch (14) weisende Befestigungsfläche (44) am Fußteil (31) bündig oder vertieft zu einer Umfangsfläche (49) vorgesehen ist, welche an den Aufnahmebereich (48) angrenzt.

4. Anordnung nach einem der vorhergehenden Ansprüche, **dadurch gekennzeichnet, dass** der Befestigungsclip (22) einen hülsenförmigen Grundkörper (31) aufweist, an dem zumindest ein gegenüber dem Grundkörper (31) nach außen gerichtetes und nachgiebiges Ärmchen (42) vorgesehen ist.

5. Anordnung nach Anspruch 4, **dadurch gekennzeichnet, dass** ein freies Ende (43) des Ärmchen (42) in einem Abstand zum Fußteil (32) des Befestigungsclips (22) angeordnet ist, welcher zumindest der Dicke des die Durchstecköffnung (24) umgebenden Karosserieflansches (14) entspricht.

6. Anordnung nach einem der Ansprüche 3 bis 5, **dadurch gekennzeichnet, dass** die an den Aufnahmebereich (48) angrenzende Umfangsfläche (49) der Umspritzung (16) oder Dichtungsabschnitte (26) an der Umspritzung (16) im montierten Zustand der Scheibe (12) zumindest abschnittsweise an einer Außenseite des Karosserieflansches (14) anliegt.

7. Anordnung nach Anspruch 6, **dadurch gekennzeichnet, dass** im montierten Zustand der Scheibe (12) zumindest ein Ärmchen (42) des Befestigungsclips (22) an einer Innenseite des Karosserieflansches (14) sich abstützt und vorzugsweise unter zumindest geringer Vorspannung die an der Außenseite des Karosserieflansches (14) zumindest abschnittsweise anliegende Umspritzung (16) vorgesehen ist.

8. Anordnung nach einem der vorhergehenden Ansprüche, **dadurch gekennzeichnet, dass** das Halteelement (21) einteilig an der Umspritzung (16) angeformt ist.

9. Anordnung nach Anspruch 1, **dadurch gekennzeichnet, dass** an dem zumindest einen Ärmchen (42) und dem zumindest einen Fixierelement (38) Einführschrägen (56, 41) vorgesehen sind, die jeweils eine entgegengesetzte, Wirkrichtung aufweisen.

10. Anordnung nach Anspruch 1, **dadurch gekennzeichnet, dass** der hülsenförmige Grundkörper (31) zumindest zwei vorzugsweise spiegelbildlich angeordnete Hälften umfasst, die durch ein Kopfteil (33) verbunden sind, welches insbesondere eine stegförmige Gelenkverbindung (36) umfasst.

11. Anordnung nach Anspruch 1, **dadurch gekennzeichnet, dass** das zumindest eine Fixierelement (38) einen wulstförmigen oder widerhakenförmigen Querschnitt aufweist.

12. Anordnung nach Anspruch 1, **dadurch gekennzeichnet, dass** zwischen zwei mit radialem Abstand am hülsenförmigen Grundkörper (31) angeordneten Ärmchen (42) zumindest ein Zentrierelement (51) vorgesehen ist, welches an das Fußteil (32) angrenzt und vorzugsweise eine zum Kopfteil (33) weisende Einführschräge (52) umfasst.

13. Anordnung nach Anspruch 1, **dadurch gekennzeichnet, dass** das Fußteil (32) als nach außen gerichteter und zumindest abschnittsweise ausgebildeter Stegabschnitt ausgebildet ist, der an seiner Außenseite eine Anlagefläche (46) zur Abstützung an einer Umspritzung (16) aufweist und gegenüberliegend eine Befestigungsfläche (44) umfasst, die zu dem freien Ende (43) des zumindest einen Ärmchens (42) weist, wobei der Abstand zwischen der Befestigungsfläche (44) und dem freien Ende (43) des zumindest einen Ärmchen (42) zumindest der Dicke des die Durchstecköffnung (24) umgebenden Karosserieflansches (14) entspricht.

14. Anordnung nach Anspruch 1, **dadurch gekennzeichnet, dass** der Befestigungsclip (22) als Kunststoffspritzgussteil ausgebildet ist.

## Claims

1. An assembly of a fixed pane (12) on a body flange (14) in which the pane (12) has a molding (16) arranged on the pane circumferential edge (17) and a fastening clip (22) which connects the molding (16) to the body flange (14), **characterized in that**,
- the fastening clip (22) provides a sleeve-shaped main body (31) having a radially outward-facing base portion (32) and, at a distance from the base portion (32), at least one arm (42) facing outwards with respect to the main body (31) and radially resilient, which form a first fastening device, and that on an inner circumference of the sleeve-shaped main body (31) at least one radially inward-facing locating member (38) is provided which forms a second fastening device,
- at least one retaining member (21) facing towards the body flange (14) is provided at the molding (16), which is shaped in the form of a spike or pin, on which said fastening clip (22) may be arranged before the fastening clip (22) for mounting the pane (12) to the body flange (14) is fixed in an insertion through-hole (24) of the body flange (14) in an automatically locking manner,
- the fastening clip (22) is provided with at least one locating member (38) which, once the fastening clip (22) has been placed or slid onto the retaining member (21) of the molding (16), abuts at least partially on the retaining member (21), and
- the base portion (32) of the fastening clip (22) is arranged in a reception zone (48) surrounding the retaining member (21).

2. The assembly according to claim 1, **characterized in that**, once the fastening clip (22) has been positioned in the insertion through-hole (24) of the body flange (14), the at least one locating member (38) is capable of being moved into an engagement position with respect to the retaining member (21) and preferably an accidental detaching of the fastening clip (22) from the retaining member (21) is prevented.

3. The assembly according to claim 1, **characterized in that**, the base portion (31) of the fastening surface (44) facing towards the body flange (14) is provided flush or recessed with respect to a circumferential surface (49) which adjoins the reception zone (48).

4. The assembly according to one of the proceeding claims, **characterized in that**, the fastening clip (22) has a sleeve-shaped main body (31) on which at least one resilient, small arm (42) facing outwards with respect to the main body (31) is provided.

5. The assembly according to claim 4, **characterized in that**, a free end (43) of the arm (42) is provided at a distance from the base portion (32) of the fastening clip (22) that corresponds at least to the thickness of the body flange (14) surrounding the insertion through-hole (24).

6. The assembly according to claim 3 to 5, **characterized in that**, the circumferential surface (49) of the molding (16) which adjoins the reception zone (48) or the sealing portions (26) on the molding (16) abuts at least partially on an outer surface of the body flange (14) when the pane (12) is in a mounted condition.

7. The assembly according to claim 6, **characterized in that**, when the pane (12) is in a mounted condition at least one arm (42) of the fastening clip (22) is supported on an inner surface of the body flange (14) and the molding (16) is provided on the outer surface of the body flange (14), abutting with at least a small amount of bias at least along individual sections thereof.

8. The assembly according to one of the proceeding claims, **characterized in that**, the retaining member (21) is one-piece shaped at the molding (16).

9. The assembly according to claim 1, **characterized in that**, the at least one arm (42) and the at least one locating member (38) are provided with insertion bevels (56, 41) which have opposite directions of action with respect to each other.

10. The assembly according to claim 1, **characterized in that**, the sleeve-shaped main body (31) has at least two preferably mirror-inverted arranged halves, which are connected by a head portion (33), which comprises a land-shaped articulation.

11. The assembly according to claim 1, **characterized in that**, the at least one locating member (38) has a bead-like or barb-like cross-section.

12. The assembly according to claim 1, **characterized in that**, between two radially spaced-apart arms (42) arranged on the sleeve-shaped main body (31) has at least one centering member (51), which adjoins the base portion (32) and provides an insertion bevel (52) facing towards the head portion (33).

13. The assembly according to claim 1, **characterized in that**, the base portion (32) is formed as an outward-facing land portion, present at least along individual sections, which is provided, on its outside, with a contact surface (46) for being supported on a molding (16) and is provided, on the opposite side, with a fastening surface (44) facing towards the free end (43) of the at least one arm (42), the distance between the fastening surface (44) and the free end (43) of the at least one arm (42) corresponding at least to the thickness of the body flange (14) surrounding the insertion through-hole (24).

14. The assembly according to claim 1, **characterized in that**, the fastening clip (22) is realized as an injection-molded plastic part.

## Revendications

1. Agencement d'une vitre fixe (12) sur une bride de carrosserie (14) dans lequel la vitre (12) présente un surmoulage (16) disposé sur le rebord de vitre (17) et avec un clip de fixation (22) qui assemble le surmoulage (16) à la bride de carrosserie (14), **caractérisé en ce que**
- le clip de fixation présente un corps de base (31) en forme de douille qui présente un pied (32) s'orientant radialement vers l'extérieur et, à une distance donnée du pied (32), au moins un bras (42) flexible de manière radiale et s'orientant radialement vers l'extérieur par rapport au corps de base (31) lesquels forment un premier dispositif de fixation, et **en ce que** sur une circonférence intérieure du corps de base (31) en forme de douille est prévu au moins un élément de blocage (38) s'orientant radialement vers l'intérieur lequel forme un deuxième dispositif de fixation,
- sur le surmoulage (16) est prévu au moins un élément de retenue (21) orienté vers la bride de carrosserie (14) et réalisé sous forme de broche ou de tige sur lequel peut être disposé le clip de fixation (22) avant que ledit clip de fixation (22) soit, en vue du montage de la vitre sur la bride de carrosserie (14), fixé par encliquetage autonome dans une ouverture traversante (24) de la bride de carrosserie (14),
- ledit au moins un élément de blocage (38) appuie, une fois le clip de fixation (22) monté ou enfilé sur l'élément de retenue (21) du surmoulage (16), au moins partiellement contre l'élément de retenue (21), et
- le pied (32) du clip de fixation (22) peut être disposé dans une zone de réception (48) entourant l'élément de retenue (21).

2. Agencement selon la revendication 1, **caractérisé en ce que**, après le positionnement du clip de fixation (22) dans l'ouverture traversante (24) de la bride de carrosserie (14), ledit au moins un élément de blocage (38) peut être déplacé dans une position d'engrènement par rapport à l'élément de retenue (21) et que de préférence un détachement inopiné du clip de fixation (22) de l'élément de retenue (21) soit empêché.

3. Agencement selon la revendication 1, **caractérisé en ce qu'**une surface de fixation (44) située sur le pied (31) et orientée vers la bride de carrosserie (14) est prévue de manière à former une surface plane ou abaissée par rapport à une surface circonférencielle (49) qui est contiguë à la zone de réception (48).

4. Agencement selon l'une quelconque des revendications précédentes, **caractérisé en ce que** le clip de fixation (22) présente un corps de base (31) en forme de douille sur lequel est prévu au moins un bras (42) flexible et orienté vers l'extérieur par rapport au corps de base (31).

5. Agencement selon la revendication 4, **caractérisé en ce qu'**une extrémité libre (43) du bras (42) est disposée à une distance donnée par rapport au pied (32) du clip de fixation (22) laquelle correspond au moins à l'épaisseur de la bride de carrosserie (14) entourant l'ouverture traversante (24).

6. Agencement selon l'une quelconque des revendications 3 à 5, **caractérisé en ce que** la surface circonférentielle (49) du surmoulage (16) contiguë à la zone de réception (48) ou que des parties d'étanchéité (26) situées sur le surmoulage (14) appuie(nt), lorsque la vitre (12) est à l'état monté, au moins partiellement contre une face extérieure de la bride de carrosserie (14).

7. Agencement selon la revendication 6, **caractérisé en ce que**, lorsque la vitre (12) est à l'état monté, au moins un bras (42) du clip de fixation (22) prend appui contre une face intérieure de la bride de carrosserie (14) et **en ce que** le surmoulage (16) contigu au moins partiellement à la face extérieure de la bride de carrosserie (14) est prévu de préférence avec au moins une faible précontrainte.

8. Agencement selon l'une quelconque des revendications précédentes, **caractérisé en ce que** l'élément de retenue (21) est moulé en une seule pièce avec le surmoulage (16).

9. Agencement selon la revendication 1, **caractérisé en ce que** sur ledit au moins un bras (42) et ledit au moins un élément de blocage (38) sont prévues des inclinaisons d'insertion (56, 41) qui présentent respectivement un sens d'action opposé.

10. Agencement selon la revendication 1, **caractérisé en ce que** le corps de base (31) en forme de douille comprend au moins deux moitiés disposées de préférence de manière réfléchie lesquelles sont reliées par une tête (33) qui comprend en particulier un joint articulé (36) en forme de bande.

11. Agencement selon la revendication 1, **caractérisé en ce que** ledit au moins un élément de blocage (38) présente une section torique ou en forme de crochet.

12. Agencement selon la revendication 1, **caractérisé en ce qu'**entre deux bras (47) disposés à une distance radiale donnée sur le corps de base (31) en forme de douille est prévu au moins un élément de centrage (51) qui est contigu au pied (32) et qui comprend de préférence une inclinaison d'insertion (52) orientée vers la tête (33).

13. Agencement selon la revendication 1, **caractérisé en ce que** le pied (32) est réalisé sous forme de partie de bande au moins partiellement formée et orientée vers l'extérieur laquelle présente, sur sa face extérieure, une surface d'appui (46) pour prendre appui contre un surmoulage (16) et qui comprend, du côté opposé, une surface de fixation (44) qui est orientée vers l'extrémité libre (43) dudit au moins un bras (42), la distance entre la surface de fixation (44) et l'extrémité libre (43) dudit au moins un bras (42) correspondant au moins à l'épaisseur de la bride de carrosserie (14) entourant l'ouverture traversante (24).

14. Agencement selon la revendication 1, **caractérisé en ce que** le clip de fixation (22) est réalisé sous forme de pièce injectée en matière plastique.
